# EUROPÄISCHE PATENTSCHRIFT

(11) **EP 3 949 011 B1**
(45) Veröffentlichungstag und Bekanntmachung des Hinweises auf die Patenterteilung: **09.10.2024**
(21) Anmeldenummer: 20713616.9
(22) Anmeldetag: 23.03.2020
(51) Int. Cl.: H01Q 1/22, H01P 5/107, H01Q 19/08

(54) **RADARMODUL MIT MIKROWELLEN-CHIP**
RADAR MODULE COMPRISING A MICROWAVE CHIP
MODULE RADAR À PUCE HYPERFRÉQUENCE

(30) Priorität: 02.04.2019 DE 102019204680
(43) Veröffentlichungstag der Anmeldung: 09.02.2022
(73) Patentinhaber: VEGA Grieshaber KG, 77709 Wolfach (DE)
(72) Erfinder: SCHULTHEISS, Daniel, 78132 Hornberg (DE); MÜLLER, Christoph, 77728 Oppenau (DE); BAUR, Roland, 78126 Königsfeld (DE)
(74) Vertreter: Maiwald GmbH
(86) Internationale Anmeldenummer: PCT/EP2020/057991
(87) Internationale Veröffentlichungsnummer: WO 2020/200883

(56) Entgegenhaltungen:
- EP-A1- 1 357 395
- EP-A1- 3 450 931
- EP-B1- 1 357 395
- WO-A1-2010/130293
- WO-A1-2018/014951
- WO-A1-90/13927
- JP-A- H07 193 423

## Beschreibung

### Gebiet der Erfindung

Die Erfindung betrifft die Radarmesstechnik zur Prozessautomatisierung.

Insbesondere betrifft die Erfindung ein Radarmodul, eingerichtet zur Anlagenüberwachung, ein Radarmessgerät mit einem derartigen Radarmodul, die Verwendung eines Radarmoduls zur Füllstandmessung, Grenzstandmessung oder Anlagenautomatisierung, sowie ein Verfahren zur Herstellung eines Radarmoduls.

### Hintergrund

Radarmessgeräte werden zur Prozessautomatisierung, insbesondere zur Anlagenüberwachung, wie der Füllstandmessung, der Grenzstandmessung oder der Objekterkennung, eingesetzt.

Die Radarsignale werden von einer Radarsignalquelle erzeugt und in einen Hohlleiter oder eine Antenne eingekoppelt, von der aus die Radarsignale dann in Richtung des zu überwachenden Objekts bzw. des Füllguts abgestrahlt werden.

Hierfür übliche Ausführungen einer Hohlleitereinkopplung weisen einen metallischen Stift, eine Finne, eine Patchantenne oder eine ähnliche Struktur auf. Meist wird das Mikrowellensignal mittels einer Bond-Verbindung mit Schaltungsteilen (zum Beispiel Mikrostrip-Strukturen) auf einer Trägerplatte angeschlossen. Auch kann die Antenne direkt auf dem Chip integriert sein (Antennaon-Chip), die aber erst zusammen mit einer dielektrischen Linse eine gute Richtwirkung erzeugt.

Derartige Radarmodule werden beispielsweise in Füllstandradargeräten eingesetzt und sind für W-Band Frequenzen im Bereich von 80 GHz ausgeführt.

Das Dokument EP 3 450 931 A1 betrifft eine Füllstandmessung mit Füllstandmessgeräten, die nach dem Laufzeitverfahren arbeiten. Insbesondere betrifft die Erfindung eine Hohlleitereinkopplung für ein Füllstandradar, ein Hochfrequenz-Radarmodul für ein Füllstandradar und ein Füllstandradar mit einem solchen Hochfrequenz-Radarmodul.

Das Dokument WO 2010/130293 A1 betrifft eine planare Struktur in Form eines Chips.

Das Dokument WO2018/014951 A1 betrifft ein Antennengehäuse und ein Herstellungsverfahren dafür. Das Antennengehäuse ist insbesondere für einen integrierten Schaltkreis im Millimeterwellenbereich, wie z. B. einen Hochfrequenz-Transceiver, vorgesehen.

### Zusammenfassung

Es ist eine Aufgabe der vorliegenden Erfindung, ein alternatives Radarmodul anzugeben, das zur Anlagenüberwachung eingerichtet ist.

Diese Aufgabe wird durch die Gegenstände der unabhängigen Patentansprüche gelöst. Weiterbildungen der Erfindung ergeben sich aus den Unteransprüchen und der folgenden Beschreibung von Ausführungsformen.

Ein erster Aspekt der Erfindung betrifft ein Radarmodul, eingerichtet zur Anwendung in der Automatisierungstechnik, nämlich der Anlagenüberwachung, welches einen Mikrowellen-Chip aufweist. Der Mikrowellen-Chip weist eine Radarsignalquelle auf, welche dazu eingerichtet ist, ein Radarsignal zu erzeugen. Auch weist er ein Koppelelement auf, wobei das Koppelelement und die Radarsignalquelle mit einer Signalverbindung verbunden sind, beispielsweise in Form einer Mikrostripleitung. Da sich die Verbindung aber auf dem Chip selbst befindet, kommt am ehesten eine sehr kurze elektrische Verbindung zu den Schaltungsteilen auf dem Chip zum Einsatz Es ist ein Resonanzraum im Mikrowellen-Chip vorgesehen, in welchen das Koppelelement hineinragt, wobei das Koppelelement dazu eingerichtet ist, das Radarsignal in den Resonanzraum einzukoppeln.

Unter dem Begriff Automatisierungstechnik kann ein Teilgebiet der Technik verstanden werden, welches Maßnahmen zum Betrieb von Maschinen und Anlagen ohne Mitwirkung des Menschen beinhaltet. Ein Ziel der damit zusammenhängenden Prozessautomatisierung ist es, das Zusammenspiel einzelner Komponenten einer Werksanlage in den Bereichen Chemie, Lebensmittel, Pharma, Erdöl, Papier, Zement, Schifffahrt oder Bergbau zu automatisieren. Hierzu können eine Vielzahl an Sensoren eingesetzt werden, welche insbesondere an die spezifischen Anforderungen der Prozessindustrie, wie bspw. mechanische Stabilität, Unempfindlichkeit gegenüber Verschmutzung, extremen Temperaturen und extremen Drücken, angepasst sind. Messwerte dieser Sensoren werden üblicherweise an eine Leitwarte übermittelt, in welcher Prozessparameter wie Füllstand, Grenzstand, Durchfluss, Druck oder Dichte überwacht und Einstellungen für die gesamte Werksanlage manuell oder automatisiert verändert werden können.

Ein Teilgebiet der Automatisierungstechnik betrifft die Logistikautomation. Mit Hilfe von Distanz- und Winkelsensoren werden im Bereich der Logistikautomation Abläufe innerhalb eines Gebäudes oder innerhalb einer einzelnen Logistikanlage automatisiert. Typische Anwendungen finden z.B. Systeme zur Logistikautomation im Bereich der Gepäck- und Frachtabfertigung an Flughäfen, im Bereich der Verkehrsüberwachung (Mautsysteme), im Handel, der Paketdistribution oder aber auch im Bereich der Gebäudesicherung (Zutrittskontrolle). Gemein ist den zuvor aufgezählten Beispielen, dass eine Präsenzerkennung in Kombination mit einer genauen Vermessung der Größe und der Lage eines Objektes von der j eweiligen Anwendungsseite gefordert wird. Hierfür können Sensoren auf Basis optischer Messverfahren mittels Laser, LED, 2D-Kameras oder 3D-Kameras, die nach dem Laufzeitprinzip (time of flight, ToF) Abstände erfassen, verwendet werden.

Ein weiteres Teilgebiet der Automatisierungstechnik betrifft die Fabrik-/Fertigungsautomation. Anwendungsfälle hierzu finden sich in den unterschiedlichsten Branchen wie Automobilherstellung, Nahrungsmittelherstellung, Pharmaindustrie oder allgemein im Bereich der Verpackung. Ziel der Fabrikautomation ist, die Herstellung von Gütern durch Maschinen, Fertigungslinien und/oder Roboter zu automatisieren, d. h. ohne Mitwirkung des Menschen ablaufen zu lassen. Die hierbei verwendeten Sensoren und spezifischen Anforderungen im Hinblick auf die Messgenauigkeit bei der Erfassung der Lage und Größe eines Objektes sind mit denen der im vorigen Beispiel der Logistikautomation vergleichbar.

Bei der Anlagenüberwachung kann es sich beispielsweise um eine Füllstand- oder Grenzstandmessung handeln. Auch kann das Radarmodul eingerichtet sein, einen Gefahrenbereich einer Maschine zu überwachen, Objekte zu detektieren oder gar zu erkennen, beispielsweise im Rahmen einer Gefahrenraumüberwachung, oder Objekte auf Förderbändern zu detektieren und zu zählen bzw. den Massefluss eines Schüttguts auf einem Förderband zu bestimmen.

Das Hochfrequenzsignal (Radarsignal) des Mikrowellen-Chips muss nicht zunächst auf eine Leiterplatte überführt werden. Dies würde üblicherweise mittels Wirebonden als Verbindungstechnologie erfolgen, was HF-technisch nachteilig sein kann. Auch eine Flip-Chip-Montage ist hier möglich.

Die Signalverbindung zwischen der Radarsignalquelle und dem Koppelelement kann mit einer möglichst geringen Dämpfung eingerichtet sein, so dass die Empfindlichkeit des Radarmoduls möglichst geringfügig beeinflusst wird. Da zum Anschluss des Koppelelements an die Radarsignalquelle keine Bonddrähte vorgesehen sind, können sich Schwankungen in Länge und Platzierung der Bonddrähte nicht negativ auf die Performance des Radarmoduls auswirken.

Da das Radarsignal (Mikrowellensignal) direkt vom Mikrowellen-Chip in einen Hohlleiter oder eine Antenne eingekoppelt werden kann, lassen sich mechanische Toleranzen minimieren, insbesondere da das Koppelelement ja Bestandteil des Mikrowellen-Chips ist.

Neben dem Koppelelement ist auch der Resonanzraum im Chip integriert. Dies ist insbesondere für sehr hohe Frequenzen von beispielsweise über 200 GHz vorteilhaft, da in diesem Frequenzbereich die Strukturen und Dimensionen des Koppelelements, des Hohlleiters und der Antenne entsprechend klein ausfallen. Insbesondere ist der Mikrowellen-Chip mit Einkopplung flexibel für unterschiedliche Antennen einsetzbar.

Es kann als ein Kernaspekt angesehen werden, dass eine direkte Einkopplung des Radarsignals vom Mikrowellen-Chip in den Hohlleiter erfolgt, wobei das Koppelelement und ein Resonanzraum Bestandteil des Mikrowellen-Chips sind. Das Koppelelement und der Resonanzraum können in ihren Abmessungen kleiner oder in der Größenordnung der Mikrowellen-Chipabmessungen sein.

Gemäß einer Ausführungsform ist der Resonanzraum aus einem metallischen Topf gebildet, in welchem der Mikrowellen-Chip ganz oder zumindest teilweise angeordnet ist. Der Resonanzraum ist ein Teil der Einspeisegeometrie und diese befindet sich in/auf oder um dem Chip. Es ist möglich, dass der Chip in den Resonanzraum eingebracht wird.

Beispielsweise kann ein Bereich des Chips ausgefräst sein, so dass der "Topf" auf den Chip aufgesetzt werden kann oder sich der Chip im Wesentlichen vollständig innerhalb des Resonanzraums, der durch den Topf ausgebildet wird, befindet.

Gemäß einer weiteren Ausführungsform weist der Resonanzraum einen metallisierten Boden und eine seitliche Metallisierung auf, welche im Mikrowellen-Chip ausgebildet ist. Die seitliche Metallisierung kann beispielsweise in Form einer ringförmigen Anordnung von Durchkontaktierungen (Vias) ausgeführt sein.

Gemäß einer weiteren Ausführungsform weist der Mikrowellen-Chip eine Kavität auf, welche den Resonanzraum ausbildet. Die Innenflächen der Kavität können metallisiert sein.

Gemäß einer weiteren Ausführungsform weist das Radarmodul einen Hohlleiter auf, eingerichtet zum Leiten des eingekoppelten Radarsignals in Richtung eines zu überwachenden Objekts, bei dem es sich beispielsweise um ein Füllgut, ein Schüttgut oder eine Person handelt.

Gemäß einer weiteren Ausführungsform weist das Radarmodul eine Linse auf, eingerichtet zum Fokussieren des Radarsignals. Der Mikrowellen-Chip, der Hohlleiter und die Linse können insbesondere einteilig ausgeführt sein, also beispielsweise unter Verwendung eines Mehrkomponentenspritzgießverfahrens miteinander verbunden sein.

Gemäß einer weiteren nicht beanspruchten Ausführungsform ist der Hohlleiter an der Oberseite des Mikrowellen-Chips angeordnet, wobei der Boden des metallischen Topfs an der Unterseite des Mikrowellen-Chips angeordnet ist, so dass der Hohlleiter und der metallische Topf den Mikrowellen-Chip zumindest teilweise umschließen, um den Resonanzraum auszubilden. Die Signalverbindung zwischen dem Koppelelement und der Radarsignalquelle ist auf der Oberseite oder im Inneren des Mikrowellen-Chips angeordnet.

Gemäß einer weiteren Ausführungsform weist das Koppelelement einen Einkoppelstift, eine Patchantenne oder eine andere zur Einkopplung des Radarsignals geeignete Struktur auf. Gemäß einer weiteren Ausführungsform weist das Radarmodul eine Antenne auf, eingerichtet zum Abstrahlen des eingekoppelten Radarsignals in Richtung des zu überwachenden Objekts. Bei der Antenne handelt es sich beispielsweise um ein Antennenhorn oder die Kombination aus einem Hohlleiterstück und einem daran angeschlossenen Antennenhorn oder Antennenanschlussstück.

Der Mikrowellen-Chip kann einen Top-Layer (auch als obere Schicht oder Oberseite bezeichnet) und einen Bottom-Layer (auch als untere Schicht oder Unterseite bezeichnet) aufweisen, wobei die Signalverbindung zwischen dem Koppelelement und der Radarsignalquelle auf dem Top-Layer oder im Inneren des Mikrowellen-Chips angeordnet ist, und wobei die Antenne auf dem Bottom-Layer angeordnet ist.

Somit wird das abzustrahlende Radarsignal von dem Koppelelement durch den Chip hindurchgestrahlt, um dann von der Antenne abgestrahlt zu werden.

Gemäß einer weiteren Ausführungsform ist das Radarmodul zum Erzeugen eines Radarsignals mit einer Sendefrequenz von über 200 GHz ausgeführt.

Gemäß einer weiteren Ausführungsform beträgt der Durchmesser des Resonanzraums weniger als 1,5 mm.

Gemäß einer weiteren Ausführungsform beträgt der Durchmesser des Resonanzraums weniger als der Durchmesser des Mikrowellen-Chips.

Ein weiterer Aspekt betrifft ein Radarmessgerät mit einem oben und im Folgenden beschriebenen Radarmodul.

Ein weiterer Aspekt betrifft die Verwendung eines oben und im Folgenden beschriebenen Radarmoduls zur Füllstandmessung, Grenzstandmessung oder Anlagenautomatisierung.

Ein weiterer Aspekt betrifft ein Verfahren zur Herstellung eines oben und im Folgenden beschriebenen Radarmoduls, bei dem eine Radarsignalquelle, ein Koppelelement, eine Signalverbindung zwischen der Radarsignalquelle und dem Koppelelement und ein Resonanzraum auf bzw. in einem Mikrowellen-Chip vorgesehen wird, wobei das Koppelelement in den Resonanzraum hineinragt.

Der Resonanzraum kann beispielsweise in Form einer Kavität im Chip ausgebildet werden, deren Innenwände metallisiert sind. Auch kann zur Ausbildung des Resonanzraums im Chip eine durchgehende oder unterbrochene ringförmige Metallisierung vorgesehen sein, beispielsweise in Form von mehreren, entlang einer Kreisbahn angeordneten metallischen Leitungen, beispielsweise in Form von Durchkontaktierungen (Vias).

Im Folgenden werden mit Verweis auf die Figuren Ausführungsformen beschrieben. Die Darstellungen sind schematisch und nicht maßstäblich. Werden in der folgenden Figurenbeschreibung die gleichen Bezugszeichen verwendet, so bezeichnen diese gleiche oder ähnliche Elemente.

### Kurze Beschreibung der Figuren

Fig. 1 zeigt ein Radarmodul gemäß einer nicht beanspruchten Ausführungsform.
Fig. 2 zeigt ein Radarmodul gemäß einer ersten Ausführungsform.
Fig. 3 zeigt ein Flussdiagramm eines Verfahrens gemäß einer Ausführungsform.

### Detaillierte Beschreibung von Ausführungsformen

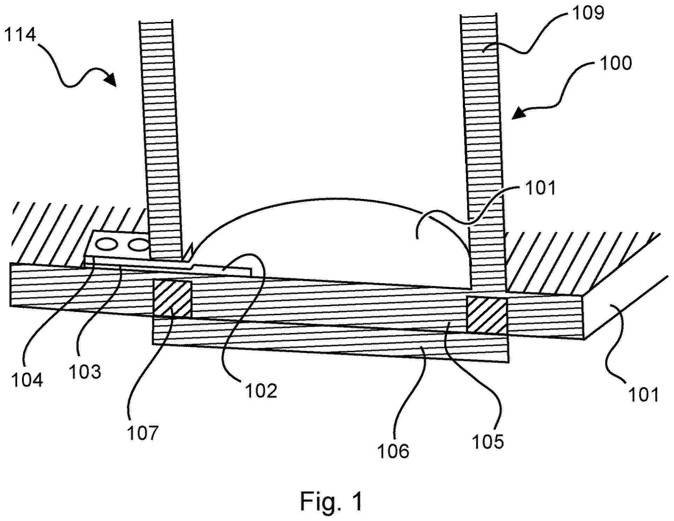

Fig. 1 zeigt einen kleinen Ausschnitt eines Radarmoduls 100 eines Radarmessgeräts 114 gemäß einer nicht beanspruchten Ausführungsform. Das Radarmodul wird im Bereich der Prozessautomatisierung eingesetzt, insbesondere zur Anlagenüberwachung.

Es weist einen Mikrowellenchip 101 auf, auf bzw. in dem eine Radarsignalquelle 104 ausgebildet ist. Es ist ein Koppelelement 102 vorgesehen, beispielsweise ein Einkoppelstift oder ein Antennenpatch, wobei das Koppelelement und die Radarsignalquelle mittels einer Signalverbindung 103 miteinander verbunden sind. Der Chip selbst bildet einen Resonanzraum 105 aus, der von einer Metallisierung 106, 107 umgeben ist. Im Falle der Fig. 1 ist diese Metallisierung in Form eines metallischen Topfes mit einem Boden 106 auf der Unterseite ausgebildet. Das Koppelelement 102 ist eingerichtet, das von der Radarsignalquelle erzeugte Radarsignal in den Resonanzraum 105 und den Hohlleiter 109 einzukoppeln. Der Hohlleiter 109 überträgt dann das eingekoppelte Radarsignal an eine Antenne, die es in Richtung des zu überwachenden Objekts abstrahlt.

Es findet eine direkte Einkopplung des Radarsignals vom Mikrowellen-Chip in den Hohlleiter 109 statt. Der Hohlleiter 109 hat im Falle sehr hoher Frequenzen (größer 200 GHz) Dimensionen, die kleiner sind als die Abmaße des Mikrowellen-Chips oder zumindest ähnlich groß sind. Beispielsweise hat ein Rundhohlleiter 109 im Frequenzbereich von über 200 GHz einen Durchmesser von weniger als 1,5 mm. Die Dimensionen des Mikrowellen-Chips liegen in einem ähnlichen Bereich. Der Hohlleiter 109 ist vollständig auf oder am Mikrowellen-Chip angekoppelt.

Auf der Chip-Oberfläche (Top-Layer) befindet sich das Koppelelement 102, beispielsweise in Form eines Einkoppelstiftes. Darüber ist der Hohlleiter 109 angeordnet. Das bedeutet, der Chip befindet sich (zumindest teilweise oder sogar vollständig) innerhalb des Hohlleiters bzw. des sich daran anschließenden Topfes 106, 107.

Der Resonanzraum 105 besteht aus dem Material des Mikrowellen-Chips. Die Seitenwände des so ausgebildeten "Topfes" sind metallisierte Strukturen. Die Metallisierung an der Unterseite des Topfes kann hergestellt werden, indem der Chip auf die entsprechende Dicke geschliffen wird und dann leitfähig auf den Boden 106 aufgeklebt wird.

Das Koppelelement 102 kann auf dem Top-Layer liegen oder aber in einer Innenlage des Mikrowellen-Chips vorgesehen sein.

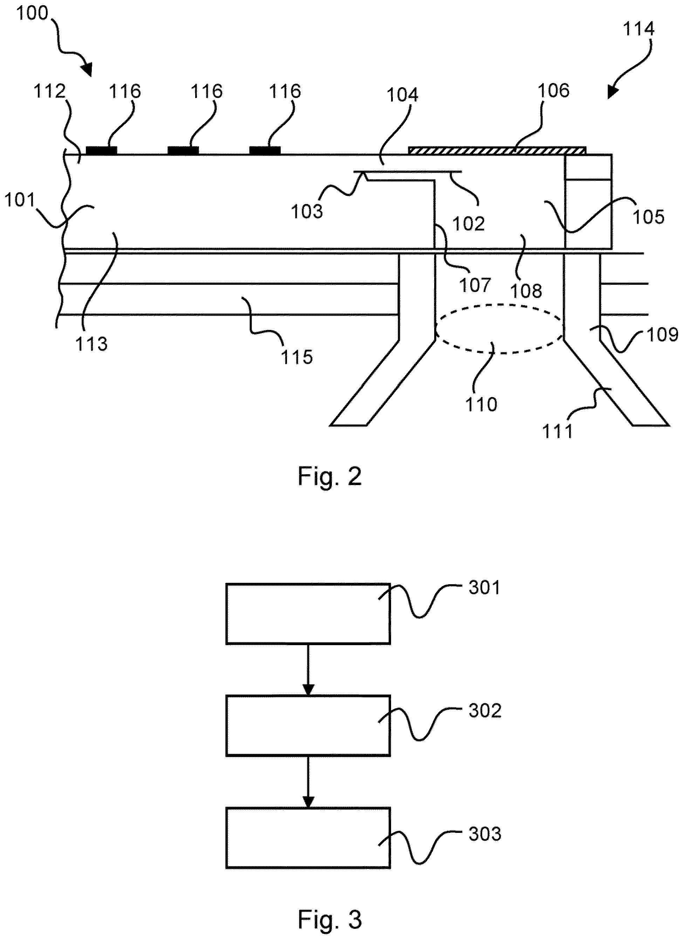

Es kann eine Linse zur Signalbündelung über der gesamten Anordnung bzw. innerhalb des Hohlleiters 109 angeordnet sein (vgl. Linse 110 in Fig. 2). Die Linse kann zusammen mit einem stückgefüllten Hohlleiter 109 auf die Anordnung montiert werden. Auch kann ein kleines Antennenhorn 111 mit einem Rundhohlleiteranschluss 109 vorgesehen sein (vgl. Fig. 2).

Der Chip kann mit einem Stück Hohlleiter, gegebenenfalls inkl. optionaler Linse, als Einlegeteil umspritzt sein und kann in einer Standard-Gehäuseform (QFN, ...) als SMD-Bauteil verwendet werden. Das Gleiche gilt für ein kleines Antennenhorn mit entsprechendem Rundhohlleiteranschluss. Der Horndurchmesser liegt dabei im Bereich weniger Millimeter.

Fig. 2 zeigt eine erste Ausführung mit in 180° gedrehter Abstrahlrichtung, also durch den Chip hindurch. Dabei wird die Antenne 111 mit dem Rundhohlleiteranschluss 109 bzw. der Hohlleiter auf der Rückseite des Chips aufgesetzt. Bezugszeichen 112 bezeichnet hierbei die Oberseite des Chips (Top-Layer), auf der die Bondpads 116 und die rückseitige Metallisierung 106 angeordnet sind. Bezugszeichen 113 bezeichnet die Rückseite oder Unterseite des Mikrowellen-Chips (Bottom-Layer), auf der der Rundhohlleiter 109 mit der Antenne 111 angebracht ist.

Der Chip muss hierzu exakt platziert werden. Ein Vorteil dieser Anordnung ist darin zu sehen, dass die übrigen Kontaktierungen 116 des Chips (für die Versorgung etc.) auf dem Top-Layer angebracht werden können. Die mechanischen Anschlüsse für die Antenne sind auf der anderen Seite des Chips angeordnet, so dass sie die Bondverbindungen nicht beschädigen können.

Der Träger 115 kann die Signale über die Bondpads 116 und entsprechende Bondverbindungen aufnehmen. Der Träger 115 kann aus verschiedenen Materialien bestehen. Er kann als kleines Verdrahtungsprint ausgeführt sein. Das Antennenanschlussstück 109, 111 kann unterschiedlich ausgeführt sein. Der Resonanzraum 105 ist im Chip integriert, beispielsweise in Form einer Kavität oder Aussparung 108. Alternativ zu einer Aussparung ist eine Metallisierung 107 in den Chip 101 eingebracht.

Fig. 3 zeigt ein Flussdiagramm eines Verfahrens gemäß einer Ausführungsform. In Schritt 301 wird ein Mikrowellen-Chip hergestellt, der eine Radarsignalquelle aufweist. In Schritt 302 wird ein Resonanzraum in dem Chip erzeugt, insbesondere durch Vorsehen einer zylindrischen durchgängigen oder unterbrochenen Metallisierung im Chip oder, alternativ, an der Innenwand einer Aussparung im Chip. In Schritt 303 wird ein Koppelelement über eine Signalverbindung mit der Radarsignalquelle verbunden, welches in den Resonanzraum hineinragt. Diese Schritte können auch in anderer Reihenfolge implementiert sein.

## Patentansprüche

1. Radarmodul (100), eingerichtet zur Anlagenüberwachung, aufweisend einen Mikrowellen-Chip (101), der Mikrowellen-Chip (101) aufweisend:
eine Radarsignalquelle (104), welche dazu eingerichtet ist, ein Radarsignal zu erzeugen;
ein Koppelelement (102), wobei das Koppelelement (102) und die Radarsignalquelle mit einer Signalverbindung (103) verbunden sind;
einen Resonanzraum (105), in welchen das Koppelelement (102) hineinragt;
wobei das Koppelelement (102) dazu eingerichtet ist, das Radarsignal in den Resonanzraum (105) einzukoppeln,
wobei der Mikrowellen-Chip (101) einen Top-Layer (112) und einen Bottom-Layer (113) aufweist;
wobei die Signalverbindung (103) zwischen dem Koppelelement (102) und der Radarsignalquelle (104) auf dem Top-Layer (112) oder im Inneren des Mikrowellen-Chips angeordnet ist;
und das Radarmodul (100) weiterhin aufweisend:
eine Antenne (111), eingerichtet zum Abstrahlen des eingekoppelten Radarsignals in Richtung eines zu überwachenden Objekts,
wobei die Antenne (111) und/oder ein Rundhohlleiteranschluss (109) der Antenne (111) auf dem Bottom-Layer (113) angeordnet ist.

2. Radarmodul (100) gemäß Anspruch 1,
wobei der Resonanzraum (105) aus einem mit leitfähigem Material ausgekleideten Topf gebildet ist, welcher in dem Mikrowellen-Chip (101) ganz oder teilweise angeordnet ist.

3. Radarmodul (100) gemäß Anspruch 1 oder 2,
wobei der Resonanzraum einen metallisierten Boden (106) und eine seitliche Metallisierung (107) aufweist, welche im Mikrowellen-Chip (101) ausgebildet ist.

4. Radarmodul (100) gemäß einem der vorhergehenden Ansprüche,
wobei der Mikrowellen-Chip (101) eine Kavität (108) aufweist, welche den Resonanzraum ausbildet.

5. Radarmodul (100) gemäß einem der vorhergehenden Ansprüche, weiter aufweisend:
einen Hohlleiter (109), eingerichtet zum Leiten des eingekoppelten Radarsignals in Richtung eines zu überwachenden Objekts.

6. Radarmodul (100) gemäß Anspruch 5, weiter aufweisend:
eine Linse (110), eingerichtet zur Fokussierung des Radarsignals;
wobei der Mikrowellen-Chip (101), der Hohlleiter (109) und die Linse (110) einteilig ausgeführt sind, insbesondere mittels Mehrkomponentenspritzgießens.

7. Radarmodul (100) gemäß einem der vorherigen Ansprüche,
wobei das Koppelelement (102) ein Einkoppelstift und/oder eine Patchantenne ist.

8. Radarmodul (100) gemäß einem der vorherigen Ansprüche,
eingerichtet zum Erzeugen eines Radarsignals mit einer Sendefrequenz von über 200 GHz.

9. Radarmodul (100) gemäß einem der vorherigen Ansprüche,
wobei der Durchmesser des Resonanzraums (105) weniger als 1,5 mm beträgt.

10. Radarmodul (100) gemäß einem der vorherigen Ansprüche,
wobei der Durchmesser des Resonanzraums (105) kleiner ist als der Durchmesser des Mikrowellen-Chips (101).

11. Radarmessgerät (114) mit einem Radarmodul (100) gemäß einem der vorherigen Ansprüche.

12. Verwendung eines Radarmoduls (100) gemäß einem der Ansprüche 1 bis 10 zur Füllstandmessung, Grenzstandmessung oder Anlagenautomatisierung.

13. Verfahren zur Herstellung eines Radarmoduls (100) nach einem der Ansprüche 1 bis 10, aufweisend den Schritt:
Vorsehen der Radarsignalquelle (104), des Koppelelements (102), des Resonanzraums (105) und der Signalverbindung (103) zwischen der Radarsignalquelle und dem Koppelement auf oder in dem Mikrowellen-Chip (101).

## Claims

1. A radar module (100) configured for system monitoring, having a microwave chip (101), the microwave chip (101) comprising:
a radar signal source (104) configured for generating a radar signal;
a coupling element (102), wherein the coupling element (102) and the radar signal source are connected with a signal connection (103);
a resonance chamber (105), into which the coupling element (102) projects;
wherein the coupling element (102) is configured to couple the radar signal into the resonance chamber (105),
wherein the microwave chip (101) comprises a top layer (112) and a bottom layer (113);
wherein the signal connection (103) between the coupling element (102) and the radar signal source (104) is arranged on the top layer (112) or inside the microwave chip;
and the radar module (100) further comprising:
an antenna (111) configured to radiate the coupled radar signal in direction of an object to be monitored,
wherein the antenna (111) and/or a circular waveguide connection (109) of the antenna (111) is arranged on the bottom layer (113).

2. The radar module (100) according to claim 1,
wherein the resonance chamber (105) is formed from a pot lined with conductive material, which is arranged in the microwave chip (101) in whole or in part.

3. The radar module (100) according to claim 1 or 2,
wherein the resonant cavity has a metallized bottom (106) and a lateral metallization (107) formed in the microwave chip (101).

4. The radar module (100) according to any one of the preceding claims,
wherein the microwave chip (101) comprises a cavity (108), which forms the resonance chamber.

5. The radar module (100) according to any one of the preceding claims, further comprising:
a waveguide (109), configured for guiding the coupled radar signal in the direction of an object to be monitored.

6. The radar module (100) according to claim 5, further comprising:
a lens (110) configured to focus the radar signal;
wherein the microwave chip (101), the waveguide (109) and the lens (110) are made in one piece, in particular by means of multi-component injection moulding.

7. The radar module (100) according to any one of the preceding claims,
wherein the coupling element (102) is a coupling pin and/or a patch antenna.

8. The radar module (100) according to any one of the preceding claims,
configured for generating a radar signal with a transmission frequency of over 200 GHz.

9. The radar module (100) according to any one of the preceding claims,
wherein the diameter of the resonance chamber (105) is less than 1.5 mm.

10. The radar module (100) according to any one of the preceding claims,
wherein the diameter of the resonance chamber (105) is smaller than the diameter of the microwave chip (101).

11. A radar measuring device (114) comprising a radar module (100) according to any one of the preceding claims.

12. Use of a radar module (100) according to any one of claims 1 to 10 for level measurement, limit level measurement or plant automation.

13. A method of manufacturing a radar module (100) according to any one of claims 1 to 10, comprising the step of:
providing the radar signal source (104), the coupling element (102) of the resonant cavity (105) and the signal connection (103) between the radar signal source and the coupling element on or in the microwave chip (101).

## Revendications

1. Module radar (100), configuré pour la surveillance d'installation, comportant une puce hyperfréquence (101), la puce hyperfréquence (101) comportant :
une source de signal radar (104) qui est configurée pour générer un signal radar ;
un élément de couplage (102), l'élément de couplage (102) et la source de signal radar étant reliés par une liaison de signalisation (103) ;
un volume résonnant (105), dans lequel l'élément de couplage (102) fait saillie ;
dans lequel l'élément de couplage (102) est configuré pour coupler le signal radar dans le volume résonnant (105),
dans lequel la puce hyperfréquence (101) comporte une couche supérieure (112) et une couche inférieure (113) ;
dans lequel la liaison de signalisation (103) entre l'élément de couplage (102) et la source de signal radar (104) est disposée sur la couche supérieure (112) ou dans la puce hyperfréquence ;
et le module radar (100) comportant en outre :
une antenne (111), configurée pour émettre le signal radar couplé en direction d'un objet à surveiller,
dans lequel l'antenne (111) et/ou un guide d'ondes circulaire (109) de l'antenne (111) est disposé sur la couche inférieure (113).

2. Module radar (100) selon la revendication 1,
dans lequel le volume résonnant (105) est formé à partir d'un pot revêtu d'un matériau conducteur qui est disposé en tout ou partie dans la puce hyperfréquence (101).

3. Module radar (100) selon la revendication 1 ou 2,
dans lequel le volume résonnant comporte un fond métallisé (106) et une métallisation latérale (107) qui est formée dans la puce hyperfréquence (101).

4. Module radar (100) selon l'une des revendications précédentes,
dans lequel la puce hyperfréquence (101) comporte une cavité (108) qui forme le volume résonnant.

5. Module radar (100) selon l'une des revendications précédentes, comportant en outre :
un guide d'ondes (109) configuré pour guider le signal radar couplé en direction d'un objet à surveiller.

6. Module radar (100) selon la revendication 5, comportant en outre :
une lentille (110) configurée pour focaliser le signal radar ;
dans lequel la puce hyperfréquence (101), le guide d'ondes (109) et la lentille (110) sont réalisés d'un seul tenant, en particulier au moyen d'un moulage par injection de plusieurs composants.

7. Module radar (100) selon l'une des revendications précédentes,
dans lequel l'élément de couplage (102) est une broche de couplage et/ou une antenne à plaque.

8. Module radar (100) selon l'une des revendications précédentes,
configuré pour générer un signal radar avec une fréquence d'émission supérieure à 200 GHz.

9. Module radar (100) selon l'une des revendications précédentes,
dans lequel le diamètre du volume résonnant (105) est inférieur à 1,5 mm.

10. Module radar (100) selon l'une des revendications précédentes,
dans lequel le diamètre du volume résonnant (105) est inférieur au diamètre de la puce hyperfréquence (101).

11. Appareil de mesure radar (114) comportant un module radar (100) selon l'une des revendications précédentes.

12. Utilisation d'un module radar (100) selon l'une des revendications 1 à 10 pour la mesure d'un niveau de remplissage, la mesure d'un niveau de seuil ou l'automatisation d'installation.

13. Procédé de fabrication d'un module radar (100) selon l'une des revendications 1 à 10, comportant l'étape de :
fournir la source de signal radar (104), l'élément de couplage (102), le volume résonnant (105) et la liaison de signalisation (103) entre la source de signal radar et l'élément de couplage sur ou dans la puce hyperfréquence (101) .
